# EUROPEAN PATENT APPLICATION

(11) **EP 4 675 137 A1**
(43) Date of publication of application: **07.01.2026**
(21) Application number: 24801813.7
(22) Date of filing: 14.05.2024
(51) Int. Cl.: F16K 11/085

(54) **SWITCHING VALVE**

(71) Applicant: Yjs Co., Ltd., Osaka-shi, Osaka 532-0021 (JP)
(72) Inventor: YONEZAWA, Ikuhiro, Osaka-shi, Osaka 5320021 (JP); TSUTSUI, Gen, Osaka-shi, Osaka 5320021 (JP); INOUE, Yasutaka, Osaka-shi, Osaka 5320021 (JP); KAMEYAMA, Shuji, Osaka-shi, Osaka 5320021 (JP)
(74) Representative: Grünecker Patent- und Rechtsanwälte PartG mbB
(86) International application number: PCT/JP2024/017764
(87) International publication number: WO 2025/238705

(57) **Abstract**

A switching valve is provided which includes a valve body (6) which has a first flow path (2) and a second flow path (3) located on the same plane, and a third flow path (4), and in which a valve chamber (5) communicating with the first flow path (2), the second flow path (3) and the third flow path (4) is formed; and a valve element (9) in which a communication path (7) that can communicate with the first flow path (2), the second flow path (3) and the third flow path (4) is formed, and which is disposed in the valve chamber (5) so as to be rotatable around the center axis. The communication path (7) includes an opening (8) having a length in the rotational direction around the center axis such that both of the first flow path (2) and the second flow path (3) can simultaneously communicate with the opening (8).

## Description

### TECHNICAL FIELD

The present invention relates to a switching valve.

### BACKGROUND ART

As a valve device (switching valve) used to, e.g., provide warm water having a suitable temperature by mixing water and high-temperature water together, for example, the below-identified Patent Document 1 discloses a valve device including a body 1 formed with flow paths 1a, 1b and 1c; and a valve element 2 formed with flow paths 2b and 2c, and disposed in the body 1. By rotating the valve element 2 around the rotational center axis 2a so as to change the circumferential positions of the flow paths 2b and 2c of the valve element 2 relative to the flow paths 1a, 1b and 1c of the body 1, it is possible to switch the flow paths through which a fluid or fluids flow.

### PRIOR ART DOCUMENT(S)

### PATENT DOCUMENT(S)

Patent Document 1: Japanese Unexamined Patent Application Publication No. H11-270721

### SUMMARY OF THE INVENTION

### PROBLEMS TO BE SOLVED BY THE INVENTION

In the valve device of Patent Document 1, the flow paths 2b and 2c are formed to correspond to the circumferential positions of the flow paths 1a, 1b and 1c (the flow paths 1a, 1b and 1c are formed at circumferential intervals of 90 degrees, and the flow paths 2b and 2c are also formed at a circumferential interval of 90 degrees). Therefore, for example, when the valve element 2 is rotated such that the opening degree between the flow path 1a and the flow path 2b is 50%, the opening degree between the flow path 1b and the flow path 2c is also set to 50%. Therefore, it is difficult to change the mixture ratio of the fluid supplied through the flow path 1a and the fluid supplied through the flow path 1b.

It is an object of the present invention to provide a switching valve that can continuously change the mixture ratio of the fluids supplied through a plurality of flow paths.

### MEANS FOR SOLVING THE PROBLEMS

In order to achieve the above object, the present invention provides a switching valve comprising: a valve body which has a first flow path and a second flow path located on a same plane, and a third flow path, and in which a valve chamber communicating with the first flow path, the second flow path and the third flow path is formed; and a valve element in which a communication path that can communicate with the first flow path, the second flow path and the third flow path is formed, and which is disposed in the valve chamber so as to be rotatable around a center axis of the valve element, wherein the communication path includes an opening having a length in a rotational direction of the valve element around the center axis such that both of the first flow path and the second flow path can simultaneously communicate with the opening (first arrangement). With this arrangement, by rotating the valve element around the center axis, and changing the amount by which the opening communicates with the first flow path and the amount by which the opening communicates with the second flow path, it is possible to continuously change the mixture ratio of the fluid supplied through the first flow path and the fluid supplied through the second flow path.

In the first arrangement, the switching valve may be designed such that the third flow path is located on the same plane, and all of the first flow path, the second flow path and the third flow path can simultaneously communicate with the opening (second arrangement). With this arrangement, it is possible to reduce the size of the switching valve.

In the first and second arrangements, the valve element may be a cock valve (third arrangement). While valve elements of various shapes such as a ball valve can be used as the valve element, the lower end of the cock valve is stably supported by the bottom inner surface of the valve chamber, and the valve element (cock valve) is less likely to be inclined when water pressure acts thereon. Therefore, it is possible to effectively prevent fluid leakage. Also, since the valve element and a valve shaft for rotating the valve element around the center axis can be integrally formed easily, the switching valve has advantages in manufacturing cost and strength.

In the third arrangement, the switching valve may further comprise an annular seal rubber disposed in an open end of at least one of the first flow path and the second flow path facing the valve chamber, the annular seal rubber being in sliding contact with the valve element (forth arrangement). With this arrangement, it is possible to more effectively prevent fluid leakage when the cock valve is used.

In the fourth arrangement, the annular seal rubber may be disposed in a peripheral groove formed in the open end of the at least one of the first flow path and the second flow path, the peripheral groove having an oval shape so as to have a short axis along the rotational direction of the valve element and a long axis along a direction perpendicular to the rotational direction (fifth arrangement). With this arrangement, the inner and outer walls of the peripheral groove reduce deformation of the annular seal rubber, and prevent the annular seal rubber from falling off. Especially since the peripheral groove has an oval shape so as to have a long axis in the direction perpendicular to the rotational direction, the frictional forces generated between the valve element and the ends of the annular seal rubber in the rotational direction are less likely to partially concentrate on the ends of the annular seal rubber in the rotational direction. Therefore, the frictional forces more reliably prevent the annular seal rubber from falling off from the peripheral groove toward the outer or inner side.

In the fourth and fifth arrangements, the annular seal rubber may be an annular seal rubber in which high sliding properties particles having sliding resistance lower than sliding resistance of a rubber material as a base material are mixed to be partially exposed to a surface of the rubber material, and a lubricant is applied to a surface of the annular seal rubber (sixth arrangement). By mixing such high sliding properties particles into the rubber material, it is possible to reduce the sliding resistance during rotation of the valve element. In addition, by applying a lubricant so as to increase the lubricity of the surfaces of the high sliding properties particles, it is possible to prevent the high sliding properties particles from separating from the rubber surface. Therefore, it is possible to avoid a situation where the rubber surface becomes an uneven surface due to such separation, and the sealing performance decreases accordingly.

In the third to sixth arrangements, a deflection member may be disposed in the valve element such that fluids flowing into the valve element through the first flow path and the second flow path are deflected toward the third flow path by the deflection member (seventh arrangement). With this arrangement, it is possible to avoid a situation where the fluids flowing into the valve element through the first flow path and the second flow path collide against each other and become turbulent, and the discharge efficiency of the fluid discharged from the third flow path decreases.

In the third to seventh arrangements, a recess may be formed in a bottom of the valve element such that a gap is defined between the recess and a bottom inner surface of the valve chamber (eighth arrangement). With this arrangement, it is possible to reduce the rotational resistance due to the friction between the bottom of the valve element and the bottom inner surface of the valve chamber. Therefore, it is possible to rotate the valve element smoothly.

In the third to eighth arrangements, a bridging element may be disposed in the opening so as to span the opening (ninth arrangement). With this arrangement, even if the opening of the communication path is expanded to ensure the flow rate, when the valve element is rotated around the center axis, the bridging element prevents the annular seal rubber from falling into the opening. Therefore, it is possible to increase the operability and sealing performance of the switching valve at low cost and with a simple structure.

In the ninth arrangement, the bridging element may comprise: a circumferential bridging portion formed along the rotational direction of the valve element; an axial bridging portion formed along an orthogonal direction orthogonal to the rotational direction of the valve element; or an inclined bridging portion formed to be inclined relative to both of the rotational direction of the valve element and the orthogonal direction (tenth arrangement). By forming such a bridging portion or portions, it is possible to obtain the effect of reducing the rotational resistance of the valve element due to the sliding contact between the annular seal rubber and the bridging portion(s). Also, it is possible to obtain a reinforcing effect, and thus increase the durability of the bridging element.

### EFFECTS OF THE INVENTION

According to the above arrangements of the switching valve of the present invention, since it is possible to continuously change the mixture ratio of the fluid supplied through the first flow path and the fluid supplied through the second flow path, this switching valve is usable for various purposes, e.g., for adjusting temperature and concentration.

### BRIEF DESCRIPTION OF THE DRAWINGS

Fig. 1 is a sectional view of a switching valve according to an embodiment of the present invention.
Fig. 2 is a cut perspective view of the switching valve of Fig. 1.
Fig. 3 is an exploded perspective view of the switching valve of Fig. 1.
Fig. 4A is a perspective view of a valve element used in the switching valve of Fig. 1.
Fig. 4B is a sectional view partially illustrating a variation of Fig. 4A.
Fig. 5A is a perspective view taken along line V-V of Fig. 1, and illustrating the action of the switching valve and a state in which the fluid flowing out of a first flow path flows toward a third flow path.
Fig. 5B is a perspective view taken along line V-V of Fig. 1, and illustrating the action of the switching valve and a state in which the fluids flowing out of the first flow path and a second flow path are mixed together and flow toward the third flow path.
Fig. 5C is a perspective view taken along line V-V of Fig. 1, and illustrating the action of the switching valve and a state in which the fluid flowing out of the second flow path flows toward the third flow path.
Fig. 6 is a perspective view illustrating a first variation of the valve element.
Fig. 7 is a perspective view illustrating a second variation of the valve element.
Fig. 8 is a sectional view illustrating a third variation of the valve element.
Fig. 9 is a perspective view illustrating a fourth variation of the valve element.

### BEST MODE FOR CARRYING OUT THE INVENTION

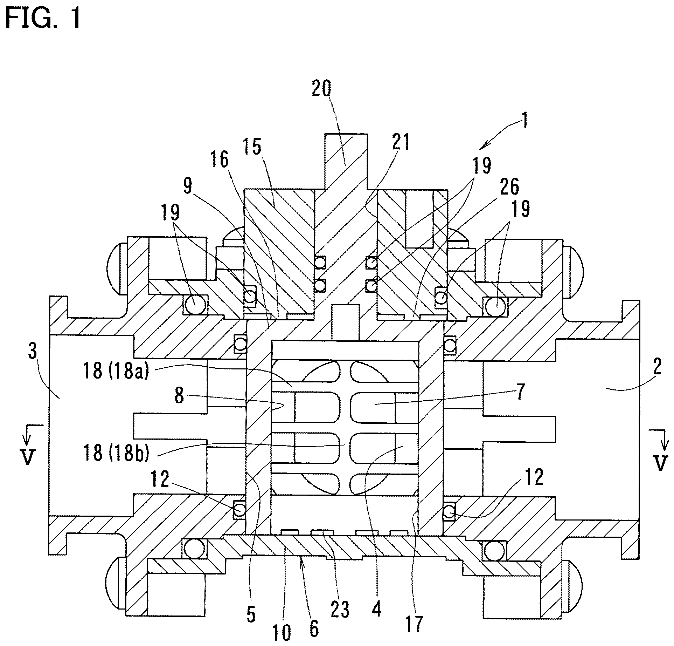

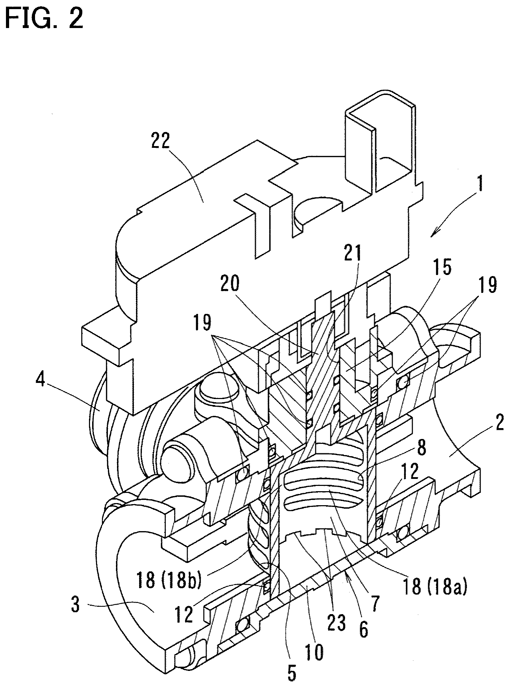

A switching valve 1 according to an embodiment of the present invention is now described with reference to the drawings. The switching valve 1 is used, for example, when water and high-temperature water are mixed together to provide warm water having a suitable temperature. As illustrated in Figs. 1 to 3, the switching valve 1 includes, as its main components, (i) a valve body 6 which has a first flow path 2 and a second flow path 3 located on the same plane, and a third flow path 4, and in which a valve chamber 5 communicating with the flow paths 2, 3 and 4 is formed; and (ii) a valve element 9 in which a communication path 7 that can communicate with the flow paths 2, 3 and 4 is formed, and which is disposed in the valve chamber 5 so as to be rotatable around the center axis. The communication path 7 includes an elongated hole-shaped opening 8 having a length in the rotational direction around the center axis such that both of the first flow path 2 and the second flow path 3 can simultaneously communicate with the opening 8.

The valve body 6 includes a body portion 10 to which the first flow path 2, the second flow path 3 and the third flow path 4 are attached. The first flow path 2 and the second flow path 3 are opposed to each other. The third flow path 4 is located on the same plane as the first and second flow paths 2 and 3 so as to extend in a direction intersecting with the first and second flow paths 2 and 3 (in the direction orthogonal to the first and second flow paths 2 and 3 in this embodiment). The valve element 9 is movable within an angular range of about 90 degrees. As used herein, the "on the same plane" includes not only a case where the tube center axes of the flow paths 2, 3 and 4 are on the same plane, but also a case where portions of the flow paths 2, 3 and 4 intersect with the same plane (state in which the flow paths 2, 3 and 4 are somewhat vertically displaced).

For example, a tube for supplying water (not shown) is connected to the first flow path 2, and a tube for supplying high-temperature water (not shown) is connected to the second flow path 3. Warm water of a suitable temperature which is a mixture of the fluid (water) flowing from the first flow path 2 and the fluid (high-temperature water) flowing from the second flow path 3 is discharged from the third flow path 4. The openings of the first and second flow paths 2 and 3 facing the valve chamber 5 are each formed with a peripheral groove having an oval shape in front view so as to have a short axis (minor axis) along the rotational direction of the valve element 9 and a long axis (major axis) along the direction perpendicular to the above rotational direction. The peripheral groove is constituted by upper and lower curved portions 11a having a substantially semicircular shape; and straight portions 11b each vertically connected to the corresponding one of both ends of one of the curved portions 11a and the corresponding one of both ends of the other curved portion 11a. An annular seal rubber 12 that comes into sliding contact with the valve element 9 is disposed in the peripheral groove.

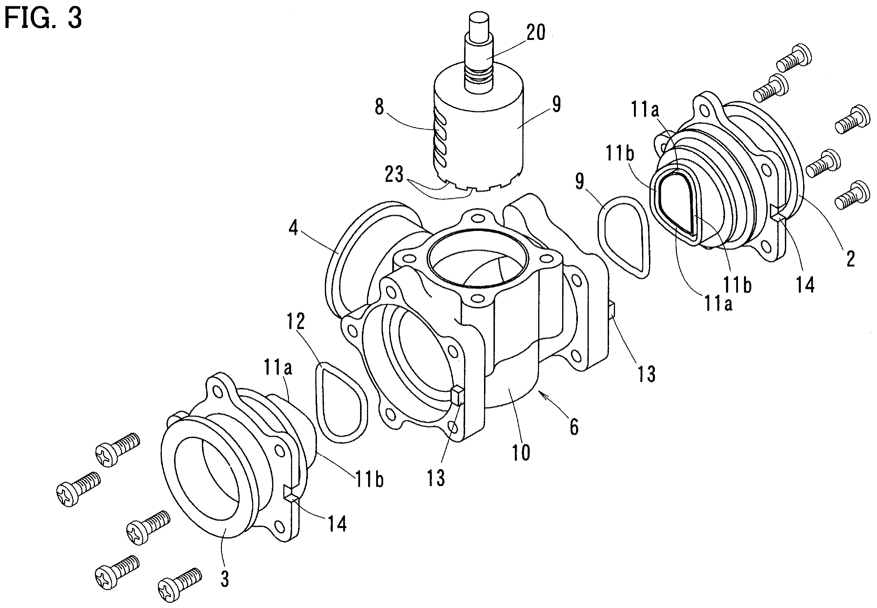

By attaching the annular seal rubber 12 to the peripheral groove in the opening of each of the first and second flow paths 2 and 3, as illustrated in Fig. 3, the seal rubber 12 deforms into a longitudinally elongated shape so as to be along the shape of the elongated hole-shaped opening 8 (surface shape of the valve element 9), and comes into sliding contact with the surface of the valve element 9. By attaching the annular seal rubber 12 to the peripheral groove as described above, the inner and outer walls of the peripheral groove reduce deformation of the annular seal rubber 12, and prevent the annular seal rubber 12 from falling off. Especially since the peripheral groove has an oval shape so as to have a long axis in the direction perpendicular to the rotational direction, the frictional forces generated between the valve element 9 and the ends of the annular seal rubber 12 in the rotational direction are less likely to partially concentrate on the ends of the annular seal rubber 12 in the rotational direction (the frictional forces are dispersed over the entire straight portions 11b). Therefore, the frictional forces more reliably prevent the annular seal rubber 12 from falling off from the peripheral groove toward the outer or inner side.

In this embodiment, the annular seal rubber 12 is an O-ring made of ethylene propylene diene rubber, which is a versatile rubber. However, as the seal rubber 12, an annular seal rubber may be used in which high sliding properties particles having sliding resistance lower than that of the rubber material as the base material are mixed to be partially exposed to the surface of the rubber material. In this case," it is preferable to apply grease as a lubricant to the surface of the annular seal rubber 12. If grease is applied, it is possible to prevent separation of the high sliding properties particles due to sliding against the valve element 9 especially at the initial stage of use. After a certain period of use, the high sliding properties particles become rounded, and even if the grease disappears, the particles do not substantially separate.

The body portion 10 has fitting protrusions 13, and the first flow path 2 and the second flow path 3 have fitting recesses 14, respectively. By fitting the fitting protrusions 13 into the respective fitting recesses 14, the body portion 10 and the first and second flow paths 2 and 3 are positioned relative to each other.

The valve chamber 5, which has a bottom, has a vertically extending tubular space at the interior central portion of the valve body 6 where the extended lines of the flow paths 2, 3 and 4 intersect with each other. A lid element 15 is disposed at the top of the valve chamber 5 so as to close the top opening of the valve chamber 5. Protrusions 16 are formed on the bottom surface of the lid element 15, and are in contact with the top surface of the valve element 9. While, in this embodiment, the flow paths 2, 3, and 4 are disposed on the same horizontal plane, the third flow path 4 may be disposed to face downward.

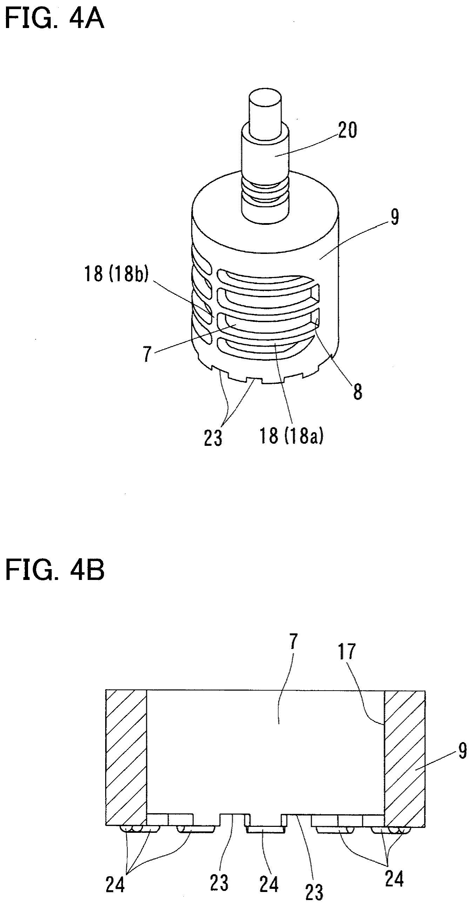

As illustrated in Fig. 4A, a cock valve is used as the valve element 9 in this embodiment. The communication path 7, which is formed in the valve element 9, includes a tubular hollow portion 17, and the opening 8, through which the hollow portion 17 communicates with the outside. The opening 8 has a length in the rotational direction around the center axis (center angle of about 170 degrees) that allows all of the first flow path 2, the second flow path 3 and the third flow path 4 to simultaneously communicate with the opening 8. The magnitude of the center angle of the opening 8 can be appropriately changed based on, e.g., the size of the valve element 9 or the sizes of the openings of the first and second flow paths 2 and 3 facing the valve chamber 5, and the opening 8 can have a center angle of more than 180 degrees. Also, the axial length of the opening 8 is determined based on the axial lengths of the openings of the flow paths 2 and 3 (lengths of the oval peripheral grooves along their long axes).

The opening 8 is formed with a bridging element 18 constituted by circumferential bridging portions 18a straddling/spanning the opening 8 in the rotational direction of the valve element 9; and an axial bridging portion 18b straddling/spanning the opening 8 in the direction orthogonal to the rotational direction of the valve element 9. The bridging portions 18a and 18b are formed along an imaginary plane extending from the cylindrical surface of the valve element 9 to the opening 8. The valve element 9 rotates around the center axis with the annular seal rubbers 12 kept in sliding contact with the tubular surface of the valve element 9 and the bridging portions 18a and 18b. While three circumferential bridging portions 18a and one axial bridging portion 18b are formed in this embodiment, the number of the bridging portions 18a and 18b can be changed as necessary. Also, if the circumferential bridging portions 18a have sufficient rigidity, the axial bridging portion 18b may be omitted. O-rings 19 are disposed between the body portion 10 and the lid element 15, and between the body portion 10 and each of the flow paths 2, 3 and 4, which are attached to the body portion 10.

A valve shaft 20 is integrally formed at the top of the valve element 9. The valve shaft 20 is inserted through a through hole 21 formed in the lid element 15. At least one O-ring 19 is disposed between the lid element 15 and the valve shaft 20. A motor 22 that rotates the valve element 9 around the center axis is attached to the end of the valve shaft 20 protruding beyond the through hole 21. A plurality of recesses 23 are formed in the bottom of the valve element 9 such that gaps are defined between the respective recesses 23 and the bottom inner surface of the valve chamber 5. The recesses 23 may be omitted. If the valve element 9 is formed with the recesses 23, as illustrated in Fig. 4B, ribs 24 having a radial width smaller than the wall thickness of the wall of the communication path 7 may be formed on the bottom of the valve element 9. In the embodiment, the ribs 24 have a semi-columnar shape curved along the peripheral edge of the bottom of the valve element 9, but the ribs 24 may have a different shape as necessary.

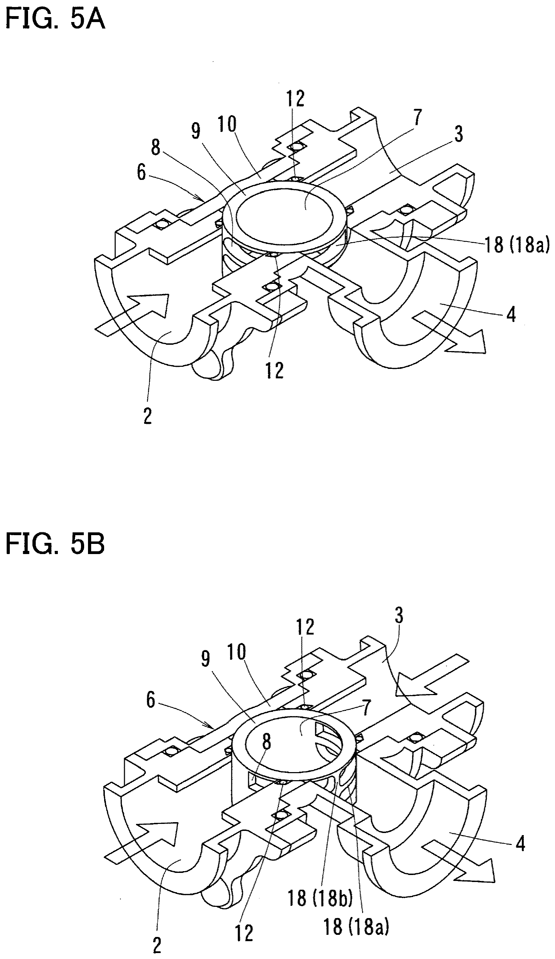

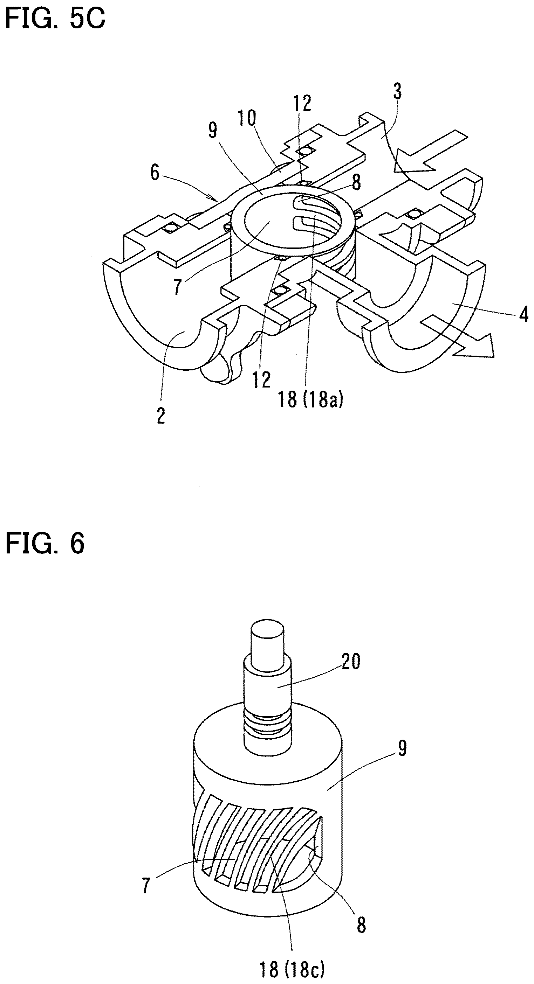

The operation of the switching valve 1 is now described. As illustrated in Fig. 5A, when the opening 8 of the valve element 9 is in communication with only the first flow path 2 and the third flow path 4, the fluid (water in this embodiment) flowing into the valve element 9 through the first flow path 2 flows out of the third flow path 4 without being mixed. As illustrated in Fig. 5B, when the valve element 9 is rotated (about 45 degrees in this embodiment) such that the opening 8 of the valve element 9 communicates with the first flow path 2, the second flow path 3 and the third flow path 4, the fluid (water) flowing into the valve element 9 through the first flow path 2 and the fluid (high-temperature water) flowing into the valve element 9 through the second flow path 3 are mixed together in the valve element 9 so as to become warm water having a suitable temperature, and the warm water flows out of the third flow path 4. As illustrated in Fig. 5C, when the valve element 9 is further rotated (about 45 degrees in this embodiment) such that the opening 8 of the valve element 9 communicates with only the second flow path 3 and the third flow path 4, the fluid (high-temperature water) flowing into the valve element 9 through the second flow path 3 flows out of the third flow path 4 without being mixed.

In the switching valve 1, the first flow path 2 and the second flow path 3 are formed in the valve body 6 so as to be located on the same plane, and the valve element 9, which is disposed in the valve body 6, has an opening 8 having a length in the rotational direction around the center axis such that both of the first flow path 2 and the second flow path 3 can simultaneously communicate with the opening 8. Therefore, by rotating the valve element 9 around the center axis, and changing the amount by which the opening 8 communicates with the first flow path 2 and the amount by which the opening 8 communicates with the second flow path 3, it is possible to continuously change the mixture ratio of the fluid supplied through the first flow path 2 and the fluid supplied through the second flow path 3. Also, in the above embodiment, since the third flow path 4 is located on the same plane as the first and second flow paths 2 and 3, and all of the flow paths 2, 3 and 4 can simultaneously communicate with the opening 8, the size of the switching valve 1 has been reduced.

Also, in the switching valve 1, since the valve element 9 is a cock valve, the lower end of the valve element 9 is stably supported by the bottom inner surface of the valve chamber 5, and the valve element 9 is less likely to be inclined when water pressure acts thereon. Therefore, it is possible to effectively prevent fluid leakage. Also, since the valve element 9 and the valve shaft 20 for rotating the valve element 9 around the center axis can be integrally formed easily, the switching valve has advantages in manufacturing cost and strength.

Also, in the switching valve 1, since the annular seal rubber 12 is disposed in the opening of each of the first and second flow paths 2 and 3 facing the valve chamber 5, it is possible to more effectively prevent fluid leakage when the cock valve is used. In the above embodiment, it is more preferable to (i) use, as the annular seal rubber 12, an annular seal rubber in which high sliding properties particles having sliding resistance lower than that of the rubber material as the base material are mixed to be partially exposed to the surface of the rubber material; and (ii) apply a lubricant to the surface of the annular seal rubber 12. If a lubricant is applied, it is possible to prevent the high sliding properties particles from separating from the rubber surface. Therefore, it is possible to avoid a situation where the rubber surface becomes an uneven surface due to such separation, and the sealing performance decreases accordingly.

Also, in the switching valve 1, since recesses 23 are formed in the bottom of the valve element 9 such that gaps are defined between the respective recesses 23 and the bottom inner surface of the valve chamber 5, it is possible to reduce the rotational resistance due to the friction between the bottom of the valve element 9 and the bottom inner surface of the valve chamber 5. Therefore, it is possible to rotate the valve element 9 smoothly. Also, by forming ribs 24 on the bottom of the valve element 9, it is possible to further reduce the rotational resistance due to the friction between the bottom of the valve element 9 and the bottom inner surface of the valve chamber 5.

Also, in the switching valve 1, since the opening 8 of the communication path 7 in the valve element 9, which faces the first and second flow paths 2 and 3, is formed with a bridging element 18 (circumferential and axial bridging portions 18a and 18b) straddling/spanning the opening 8, even if the opening 8 of the communication path 7 is expanded to ensure the flow rate, when the valve element 9 is rotated around the center axis, the bridging element 18 (circumferential and axial bridging portions 18a and 18b) prevents the annular seal rubbers 12 from falling into the opening 8. Therefore, it is possible to increase the operability and sealing performance of the switching valve 1 at low cost and with a simple structure.

Especially in the switching valve 1, since the circumferential bridging portions 18a as the bridging element 18 are formed along the rotational direction of the valve element 9, it is possible to reduce the rotational resistance of the valve element 9 due to the sliding contact between the annular seal rubbers 12 and the circumferential bridging portions 18a. Also, since the axial bridging portion 18b as the bridging element 18 is further formed along the direction orthogonal to the rotational direction of the valve element 9, it is possible to reinforce the circumferential bridging portions 18a with the axial bridging portion 18b, and thus increase the durability thereof.

Instead of forming the circumferential and axial bridging portions 18a and 18b as the bridging element 18 as described above, as illustrated in Fig. 6 as a first variation, at least one inclined bridging portion 18c as the bridging element 18 may be formed to be inclined relative to both of the rotational direction of the valve element 9 and the direction orthogonal to the rotational direction. By using the at least one inclined bridging portion 18c, it is possible to achieve the effect of preventing the annular seal rubbers 12 from falling into the opening 8 as in the above. Also, since the contact portion of each annular seal rubber 12 with the at least one inclined bridging portion 18c changes as the valve element 9 rotates, it is possible to prevent uneven wear of the annular seal rubber 12 at a specific position thereof.

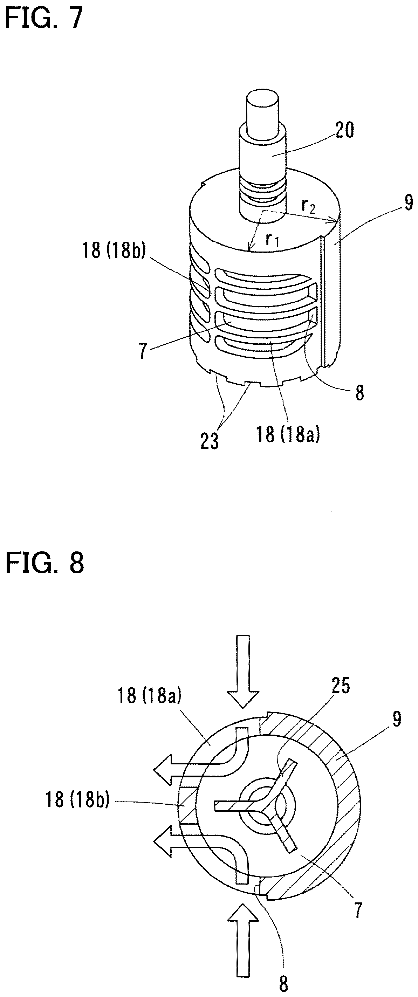

While, in the above embodiment, a cock valve having a uniform outer diameter at the entire circumferential area thereof is used as the valve element 9, as illustrated in Fig. 7 as a second variation, the valve element 9 may be designed such that the radius r₁ of the circumferential area where the opening 8 is formed is smaller than the radius r₂ of the circumferential area where the opening 8 is not formed. If the valve element 9 has such a design, in a closed valve state (e.g., the state of the second flow path 3 shown in Fig. 5A), it is possible to increase the compressed amount of the annular seal rubber(s) 12 (amount by which the annular seal rubber(s) 12 is compressed), and increase the sealing performance. On the other hand, in an open valve state in which the sealing performance is not required (e.g., the state of the first flow path 2 shown in Fig. 5A), it is possible to reduce the compressed amount of the annular seal rubber(s) 12, and reduce the torque when the valve element 9 rotates.

While, in the second variation shown in Fig. 7, about half of the valve element 9 (cock valve) in the circumferential direction constitutes a large diameter portion (radius r₂), the valve element 9 may have a convex shape at only the portion of the valve element 9 against which the annular seal rubbers 12 abut in the closed valve state. In this case, too, it is possible to obtain the same effect as in the second variation.

While, in the above embodiment, the tubular hollow portion 17 is formed in the interior of the valve element 9, as illustrated in Fig. 8 as a third variation, a deflection member 25 may be disposed in the hollow portion 17 such that the fluids flowing into the valve element 8 through the first flow path 2 and the second flow path 3 are deflected toward the third flow path 4 by the deflection member 25. The deflection member 25 extends downward from the lower surface of the upper end of the valve element 9, and has a Y shape in plan view. By thus providing the deflection member 25 so as to rectify the fluid(s) in the interior of the valve element 9, it is possible to avoid a situation where the fluids flowing into the valve element 9 through the first flow path 2 and the second flow path 3 collide against each other and become turbulent, and the discharge efficiency of the fluid discharged from the third flow path 4 decreases.

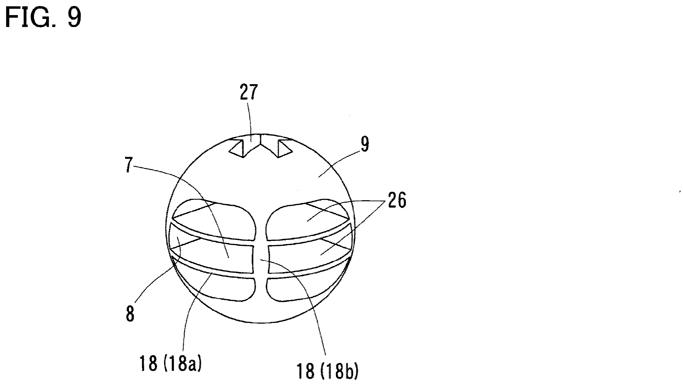

Also, while a cock valve is used as the valve element 9 in the above embodiment, a ball valve may be used instead as illustrated in Fig. 9 as a fourth variation. A communication path 7 is formed in the interior of the valve element 9 as a ball valve. The communication path 7 includes a hollow portion 17; an opening 8 through which the hollow portion 17 communicates with the outside; at least one circumferential bridging portion 18a formed along the rotational direction of the valve element 9 so as to straddle/span the opening 8; and an axial bridging portion 18b formed in the direction orthogonal to the rotational direction of the valve element 9 so as to straddle/span the opening 8. At least one partition wall 26 extending toward the interior of the hollow portion 17 is integrally connected to the at least one circumferential bridging portion 18a such that the fluids flowing in spaces defined by the at least one partition wall 26 are not mixed together in the interior of the valve element 9. A cross-shaped insertion recess 27 in which the valve shaft 20 is inserted is formed in the top of the valve element 9.

In a case where a ball valve is used as the valve element 9, too, since the opening 8 of the communication path 7 in the valve element 9, which faces the first and second flow paths 2 and 3, is formed with a bridging element 18 (circumferential and axial bridging portions 18a and 18b) straddling/spanning the opening 8, even if the opening 8 of the communication path 7 is expanded to ensure the flow rate, when the valve element 9 is rotated around the center axis, the bridging element 18 (circumferential and axial bridging portions 18a and 18b) prevents the annular seal rubbers 12 from falling into the opening 8. Therefore, it is possible to increase the operability and sealing performance of the switching valve 1 at low cost and with a simple structure.

While, in the above embodiment, a case was described in which water flows into the valve element 9 through the first flow path 2, high-temperature water flows into the valve element 9 through the second flow path 3, and warm water having a suitable temperature flows out of the third flow path 4, the kinds of fluids are not limited thereto, and other kinds of liquids or gases may flow.

The above-described embodiment is a mere example in every respect, and the present invention is not limited thereto. Therefore, the scope of the present invention is indicated not by the above description but by the claims, and should be understood to include all modifications and the meaning equivalent to the scope of the claims.

### DESCRIPTION OF REFERENCE NUMERALS

1: Switching valve
2: First flow path
3: Second flow path
4: Third flow path
5: Valve chamber
6: Valve body
7: Communication path
8: Opening
9: Valve element
10: Body portion
11a: Curved portion
11b: Straight portion
12: Annular seal rubber
13: Fitting protrusion
14: Fitting recess
15: Lid element
16: Protrusion
17: Hollow portion
18: Bridging element
18a: Circumferential bridging portion
18b: Axial bridging portion
18c: Inclined bridging portion
19: O-ring
20: Valve shaft
21: Through hole
22: Motor
23: Recess
24: Rib
25: Deflection member
26: Partition wall
27: Insertion recess

## Claims

1. A switching valve comprising:
a valve body (6) which has a first flow path (2) and a second flow path (3) located on a same plane, and a third flow path (4), and in which a valve chamber (5) communicating with the first flow path (2), the second flow path (3) and the third flow path (4) is formed; and
a valve element (9) in which a communication path (7) that can communicate with the first flow path (2), the second flow path (3) and the third flow path (4) is formed, and which is disposed in the valve chamber (5) so as to be rotatable around a center axis of the valve element (9),
wherein the communication path (7) includes an opening (8) having a length in a rotational direction of the valve element (9) around the center axis such that both of the first flow path (2) and the second flow path (3) can simultaneously communicate with the opening (8).

2. The switching valve according to claim 1, wherein the third flow path (4) is located on the same plane, and all of the first flow path (2), the second flow path (3) and the third flow path (4) can simultaneously communicate with the opening (8).

3. The switching valve according to claim 1 or 2, wherein the valve element (9) is a cock valve.

4. The switching valve according to claim 3, further comprising an annular seal rubber (12) disposed in an open end of at least one of the first flow path (2) and the second flow path (3) facing the valve chamber (5), the annular seal rubber (12) being in sliding contact with the valve element (9).

5. The switching valve according to claim 4, wherein the annular seal rubber (12) is disposed in a peripheral groove formed in the open end of the at least one of the first flow path (2) and the second flow path (3), the peripheral groove having an oval shape so as to have a short axis along the rotational direction of the valve element (9) and a long axis along a direction perpendicular to the rotational direction.

6. The switching valve according to claim 4 or 5, wherein the annular seal rubber (12) is an annular seal rubber in which high sliding properties particles having sliding resistance lower than sliding resistance of a rubber material as a base material are mixed to be partially exposed to a surface of the rubber material, and a lubricant is applied to a surface of the annular seal rubber.

7. The switching valve according to any one of claims 3 to 6, wherein a deflection member (25) is disposed in the valve element (9) such that fluids flowing into the valve element (9) through the first flow path (2) and the second flow path (3) are deflected toward the third flow path (4) by the deflection member (25).

8. The switching valve according to any one of claims 3 to 7, wherein a recess (23) is formed in a bottom of the valve element (9) such that a gap is defined between the recess (23) and a bottom inner surface of the valve chamber (5).

9. The switching valve according to any one of claims 3 to 8, wherein a bridging element (18) is disposed in the opening (8) so as to span the opening (8).

10. The switching valve according to claim 9, wherein the bridging element (18) comprises:
a circumferential bridging portion (18a) formed along the rotational direction of the valve element (9);
an axial bridging portion (18b) formed along an orthogonal direction orthogonal to the rotational direction of the valve element (9); or
an inclined bridging portion (18c) formed to be inclined relative to both of the rotational direction of the valve element (9) and the orthogonal direction.
